# EUROPEAN PATENT APPLICATION

(11) **EP 4 386 680 A1**
(43) Date of publication of application: **19.06.2024**
(21) Application number: 22214132.7
(22) Date of filing: 16.12.2022
(51) Int. Cl.: G06T 11/00

(54) **CBCT SIMULATION FOR TRAINING AI-BASED CT-TO-CBCT REGISTRATION AND CBCT SEGMENTATION**

(71) Applicant: Koninklijke Philips N.V., 5656 AG Eindhoven (NL)
(72) Inventor: SCHMIDT-RICHBERG, Alexander, Eindhoven (NL); PREVRHAL, Sven Peter, Eindhoven (NL); WIEMKER, Rafael, 5656AG Eindhoven (NL); KLINDER, Tobias, Eindhoven (NL); CAROLUS, Heike, Eindhoven (NL); SCHAEFER, Dirk, Eindhoven (NL)
(74) Representative: Philips Intellectual Property & Standards

(57) **Abstract**

The present invention relates to a computer-implemented method for generating a simulated cone-beam computed tomography image based on a computed tomography image. A computed tomography image is converted into attenuation coefficients of the represented tissue, and the computed tomography image is forward-projected to a projection image based on predetermined scanner parameters of a simulated cone-beam computed tomography scanner. After the addition of artificial noise to the projection image representing noise detected by the simulated cone-beam computed tomography scanner, the projection image is back-projected with a predetermined reconstruction algorithm for the generation of a simulated cone-beam computed tomography image of the subject. The present invention relates further to a method for generating training data for training an artificial intelligence module based on the simulated images, and to methods for registering a computed tomography image to a cone-beam computed tomography image and for segmenting a cone-beam computed tomography image with an artificial intelligence module trained with training data comprising the simulated cone-beam computed tomography images.

## Description

### FIELD OF THE INVENTION

The present invention relates to a computer-implemented method for generating a simulated cone-beam computed tomography image based on a computed tomography image, a computer-implemented method for generating training data for training of an artificial intelligence module to register a cone-beam computed tomography image to a computed tomography image, a computer-implemented method for registering a computed tomography image to a cone-beam computed tomography image, a computer-implemented method for segmenting a cone-beam computed tomography image, a data processing apparatus, a computer program, and a computer-readable storage medium.

### BACKGROUND OF THE INVENTION

The registration of Computed Tomography (CT) to Cone-Beam CT (CBCT) images as well as the segmentation of intra-operative C-arm Cone-Beam CT (CBCT) images is a recurring task in many medical applications and image-guided interventions. For example, diagnostic CT scans must be aligned with intra-operative CBCT scans to map intervention plans to the patient coordinate system for radiation therapy or guided percutaneous needle interventions. Further, the automatic segmentation of anatomical structures in Cone-Beam CT (CBCT) images is a pre-requisite for many interventional applications. For example, the kidney parenchyma and surrounding organs-at-risk must be delineated for radiation therapy or guided percutaneous needle interventions. The segmentation of CBCT images is known to be challenging due to the limited field of view and occurring image artifacts in the CBCT images. In recent years, AI-based registration methods of CT to CBCT and AI-based segmentation methods have gained popularity, as AI-based methods have proven to be superior or at least on par to conventional non-AI-based approaches with respect to speed and accuracy. AI-based training methods can be divided into supervised and semi-supervised methods.

However, while supervised training algorithms allow to directly optimize for the target deformation, ground-truth transformations are usually unknown and therefore not available during training. Therefore, this technique is usually only applied for mono-modal registration tasks with synthetic transformations as ground truth. As a remedy, semi-supervised methods may search for the target deformation by formulating several conditions like, for example, its smoothness and optimizing these conditions. However, formulating meaningful conditions can be challenging. Also training such algorithms requires a significant amount of available training image pairs specific to the application at hand. Therefore, to train such algorithms a substantial amount of appropriate training data is required. Access to large data collections is one of the main challenges of AI-based algorithm development. For CT images, large public databases, which may in part be longitudinal, exist that can be employed to train neural networks. However, this is not the case for CBCT data as abdominal CBCT, for example, is not the norm in clinical diagnostic imaging and patients cannot be unnecessarily exposed to radiation. At the same time, to achieve a comparable accuracy and robustness, even more data as for CT data would typically be needed to compensate for the increased variability of the data of cone-beam computed tomography images, like positioning, a limited field of view, non-quantitative modality, image artifacts, etc. Hence, there exists a need for improvements in the field.

The inventors of the present invention have thus found that it would be advantageous to have a method that solve these problems while preserving the advantages of the respective methods.

### SUMMARY OF THE INVENTION

It is an object of the present invention to provide an improved method of providing training data that offers a higher accuracy, and the possibility to train AI-based algorithms with more robust models.

The object of the present invention is solved by the subject matter of the independent claims, wherein further embodiments are incorporated in the dependent claims.

The described embodiments similarly pertain to the computer-implemented method for generating a simulated cone-beam computed tomography image based on a computed tomography image, the computer-implemented method for generating training data for training of an artificial intelligence module to register a cone-beam computed tomography image to a computed tomography image, the computer-implemented method for registering a computed tomography image to a cone-beam computed tomography image, the computer-implemented method for segmenting a cone-beam computed tomography image, the data processing apparatus, the computer program, and the computer-readable storage medium. The embodiments described further may be combined in any possible way. Synergistic effects may arise from different combinations of the embodiments although they might not be described in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

According to a first aspect of the invention, there is provided computer-implemented method for generating a simulated cone-beam computed tomography (CBCT) image based on a computed tomography (CT) image. The method comprises the step of receiving data representing a computed tomography image of a subject. The data may be directly acquired by a computed tomography scanner and transmitted from the same, or downloaded from a cloud storage, or obtained from a DICOM station, or in any other possible way. The computed tomography image comprises a volume of the subject being divided into a plurality of voxels, each voxel comprising a representation of a tissue property of a tissue of the subject in Hounsfield Units (HU). The method further comprises the steps of converting the Hounsfield Units of a voxel of the computed tomography image into attenuation coefficients, receiving predetermined scanner parameters of a simulated cone-beam computed tomography scanner, and forward-projecting the computed tomography image to a projection image based on the scanner parameters of the simulated cone-beam computed tomography scanner. The method further comprises the steps of adding artificial noise to the projection image, the artificial noise being a representation of noise detected by the simulated cone-beam computed tomography scanner, back-projecting the projection image with a predetermined reconstruction algorithm, thereby generating a simulated cone-beam computed tomography image of the subject, and providing the simulated cone-beam computed tomography image of the subject.

Thus, a physical simulation of CBCT images from CT scans is proposed to formulate a new registration approach for CT-to-CBCT registration, and to train neural networks for CBCT segmentation. In this way the high requirements on the training data can be mitigated and already-trained CT models can be adapted more easily to the new data of cone-beam computed tomography scanners. Since CT data are more available in clinical practice than CBCT data, the proposed solution would help in solving data scarcity. Thus, the problem of scarcity of data for CBCT protocol training is being solved for by providing an algorithm that uses CT scans to produce realistic simulations of CBCT data. This allows to utilize widely available CT data sources to create a CBCT data set that covers a wide range of anatomical variations, scan positions, field of view, and parameter settings. With this approach, and the simulated CBCT data, a supervised or unsupervised training of CT-to-CBCT registration algorithms can be employed, as well as an AI-based segmentation of CBCT images.

One of the core elements of the invention is therefore an algorithm that simulates a realistic CBCT scan from a given CT scan. It is worth to note that due to the fact that the image generation process for the CBCT image is known, any annotation, for example via a voxel-based segmentation, existing in the CT image can be transferred to the CBCT image, as there is no need for an additional annotation.

An image simulation method for simulating data from one imaging modality to another imaging modality is provided. A detailed description of the main elements is given in the following. The simulation algorithm does a physical simulation of a CBCT scan based on a CT scan. This involves receiving a computed tomography image of a subject acquired by a computed tomography scanner. The subject can be a patient, a human or an animal, and the acquired image can depict at least a part of the subject or patient. Alternatively, the term of the subject can be understood as describing only a part of the patient, for example, in case the acquired image provides a limited field of view. A subject can also be an anatomical area of interest or a positioning of the imaging system, as CBCT usually does not capture the whole subject. Thus, the subject has to be interpreted broadly. The computed tomography image describes a volume of the subject divided into a plurality of voxels, each voxel comprising a representation of a tissue property of a tissue of the subject in Hounsfield Units. The tissue property may be a measure of the opacity of the tissue with respect to X-ray radiation of a certain wavelength, for example. The Hounsfield Units of a voxel of the computed tomography image may be converted into a corresponding tissuespecific attenuation coefficient of the tissue by identifying tissue classes such as bone, stone, soft tissue, blood, and contrast media. This attenuation coefficient may be given as a function of the energy of the X-ray radiation.

After receiving predetermined scanner parameters of a simulated cone-beam computed tomography scanner, the CT image is forward projected based on the scanner parameters of the simulated CBCT scanner. These scanner parameters may comprise a location of the scanner with respect to the patent, a rotation angle, scatter properties, beam-hardening effects, or detector deficiencies, for example. In a next step, artificial noise is added to the projection image in the projection space. This noise may represent electronic noise of the detector of the simulated CBCT scanner, for example, or cross-talk between neighboring detector channels. Further, the forward-projected projection image with added noise is back-projected with a given reconstruction algorithm and scanner parameters specific to the simulated CBCT scanner, like resolution, for example. As the field of view of a cone-beam CT is generally different, usually smaller, than that of the CT, the reconstruction algorithm may comprise a cropped field of view. Reconstruction algorithms may be, for example, DCS, or FDK. The back-projected simulated CBCT image may be provided to a user, or for further processing. Hence, this invention proposes to use physical simulation of CBCT images from CT scans. These images may be used to formulate a new supervised registration approach for CT-to-CBCT registration, or for training an AI-based segmentation of CBCT images.

As illustrated, a broad set of parameters can be used. All parameters can be chosen to either cover a wide range of scanners or protocols, or to optimize the application to one specific protocol and/or reconstruction algorithm.

In an embodiment of the invention, the method further comprises the step of modifying the tissue property of the tissue of the subject. Thus, modified tissue classes can comprise the addition of renal stones or their composition, or spinal bone density can be increased. Further, it may be possible to assign a blood class to contrast media in the CT image, in order to simulate an acquired image without injected contrast media.

In a further embodiment, spectral image guided therapy systems akin to spectral CT scanners can be introduced. Several types of renal stones with strongly differing chemical compositions are known to have a distinctive spectral CT signature. Simulation of CBCT acquisition of such stones in anatomically natural locations will allow development of proof points and appropriate scan and reconstruction protocols much faster and more comprehensively as actual in vivo scanning.

Thus, typical application-specific artefacts hampering the correct segmentation or registration can be integrated in the simulation, e.g., in the intra-procedural CBCT volume, the outline of the kidneys may be corrupted by streak artefacts originating from high iodine concentrations in the urinary outflow tract. The simulation of the physical effects and their current (imperfect) correction leads to typical, realistic CBCT volumes that can be used for the supervised training of AI-based approaches. Thus, an AI-based algorithm can be trained to determine chemical compositions according to CT, CBCT or PET (Positron Emission Tomography) data. Key applications of such a technique can be demonstrated.

In an embodiment of the invention, the scanner parameters comprise at least two tube peak voltages of the simulated cone-beam computed tomography scanner. Thus, poly-energetic forward projection at two or more assumed tube peak voltages can be implemented into the simulation to effect spectral or dual-energy CBCT simulations. The forward projection of the CT image based on the scanner parameters of the simulated CBCT scanner can be poly-energetic. Thus, the scanner parameters may comprise, besides location, rotation angle, scatter, beam-hardening effects, or detector deficiencies, for example, also detection parameters of poly-energetic X-ray radiation. In addition or alternatively to the simulation of different tube peak voltage (kVp) settings of the simulated X-ray source, the detector can be modelled to be energy-selective.

In an embodiment of the invention, the computed tomography image is a fan-beam computed tomography image or a cone-beam computed tomography image. Thus, the simulation of CBCT images can be done either based on images acquired with a conventional fan-beam computer tomography scanner, or based on images acquired with a cone-beam computed tomography scanner. Thus, it is possible to utilize the widely available data of conventional CT images, or to provide training data for AI-based CBCT-to-CBCT registration, for example for intervention success control checks and outcome monitoring.

According to another aspect of the invention, there is provided a computer-implemented method for generating training data for training of an artificial intelligence module to register a cone-beam computed tomography image to a computed tomography image. The method comprises the steps of receiving data representing a first computed tomography image of a subject, generating data representing a second computed tomography image of the subject, wherein the second computed tomography image differs from the first computed tomography image in that a transformation is applied to the second computed tomography image, the transformation comprising a deformation, and/or distortion, and/or rotation, and/or translation of the subject, and/or a cropped field of view, and generating data representing the transformation. The method comprises further the steps of generating a simulated cone-beam computed tomography image based on one of the first computed tomography image and the second computed tomography image according to the method of any of the preceding embodiments, wherein the data representing the computed tomography image comprises the first and/or the second computed tomography image, and generating a set of training data, the set of training data comprising the simulated cone-beam computed tomography image based on one of the first computed tomography image and the second computed tomography image, the other one of the first computed tomography image and the second computed tomography image, and data representing the transformation. Further, the set of training data is provided.

Thus, with the training data provided with this proposed method, a registration approach may be trained to predict a transformation T' := y(I, J) given two images I, J and a ground truth transformation T by minimizing a loss function L(T,T'). Thereby, one of the images I, J is preferably a CT image, while the other one of the images I, J is a CBCT image. Therefore, data representing a first computed tomography image and a second computed tomography image have to be provided. It may be necessary, that the first computed tomography image and the second computed tomography image are images from the same subject. In alternative embodiments, it may be sufficient that the first computed tomography image and the second computed tomography image are images from a corresponding body part of different patients. However, the first CT image and the second CT image need to represent at least a similar body part of as subject, preferably the same body part of the same patient acquired with a similar field of view. For training purposes, it may be necessary that there is a transformation between the first CT image and the second CT image. The transformation can be a deformation, distortion, rotation, and/or translation of the subject or the image, and/or a cropped field of view of the image. The field of view of a cone-beam CT is generally different, usually smaller, than that of a CT. In addition to the patient being rotated, translated, etc., the CBCT imager may be at a position different from that of the CT gantry. Having these two CT images available, together with data representing the underlying transformation, one of the first CT image and the second CT image is used as basis for generating a simulated cone-beam computed tomography image according to the method described above. A set of training data generated with the method according to the present invention comprises the generated simulated cone-beam computed tomography image, together with the CT image of the two CT images that is not used for generating the simulated CBCT image, and the data representing the transformation as ground truth. An AI-based registration algorithm may be trained to predict a transformation T' given as image I the first CT image, a CBCT simulated image based on the second CT image as image J, and the ground truth transformation T by minimizing a loss function L(T,T').

Based on this, two main approaches for training an AI-based registration algorithm can be followed depending on the target application and data availability. There might be at least two strategies for collecting information for providing the set of training data, and in particular the first CT image and the second CT image with the respective transformation T as ground truth. For instance, in a first embodiment, a real transformation T is computed by registration of two CT images I and J as first CT image and second CT image. These can be, for example, two longitudinal scans or inhale/exhale image pairs of the same subject. The transformation T can be determined by conventional registration methods applied to images I and J. After using one of the images I and J as basis for generating a simulated CBCT image, a set of training data can be provided. The set of training data comprises the generated simulated CBCT image based on one of the CT images I and J, the other one of the CT images I and J, and data representing the transformation provided by the registration. Thus, an AI-based algorithm can be trained to predict T' based on I and J^{CBCT}, together with T as ground truth by minimizing the loss function L(T,T').

In an alternative embodiment an artificial transformation T is applied to transform to a first CT image, thereby generating the second CT image. After that, one of these CT images is used as basis for generating the simulated CBCT image. As the transformation is artificially applied to the CT image, data representing the transformation are known. Thus, the AI-based algorithm can be trained to estimate T' based on image I as the first CT image, image J = I_{T}^{CBCT}, i.e. a generation of a simulated CBCT image based on the image I with the applied artificial transformation T, and the known data representing the transformation T.

In an embodiment of the invention, the step of generating data representing a second computed tomography image of the subject comprises receiving data representing the second computed tomography image of the subject. In this scenario, there are scan pairs comprising a real transformation, wherein pairs of CT scans are regarded, e.g. pre- and post-operative scans, longitudinal scans at different time points, or inhale/exhale pairs of a patient. The pair of CT scans can be acquired from the same patient at different points in time or at different circumstances. However, it may even be possible to utilize scan pairs acquired from different patients, where the scan pairs depict a similar region of the bodies of the patients, for learning inter-subject registration.

In an embodiment of the invention, the step of generating data representing the transformation comprises registering the first computed tomography image to the second computed tomography image. Thus, a real transformation T is computed by registration of two CT images I and J. These can be, e.g., two longitudinal scans or inhale/exhale pairs of the same subject. Then, an algorithm can be trained to predict T' based on I and J^{CBCT}, together with the computed transformation T as ground truth. This scenario strongly depends on the accuracy of the underlying registration algorithm, which sets the lower bound on the expected accuracy. However, for many applications CT-CT registration has been shown to be extremely accurate and generally less challenging than CT-CBCT registration.

In an embodiment of the invention, the registering of the first computed tomography image to the second computed tomography image is performed with a conventional or an AI-based registering algorithm. Thus, the ground truth transformation can be determined by registering the scans using an existing, e.g., conventional, registration algorithm. Alternatively, a common AI-based registration algorithm registering two CT images can be applied.

In an embodiment of the invention, the step of generating data representing a second computed tomography image of the subject comprises applying an artificial transformation to the data representing the first computed tomography image of the subject thereby generating data representing the second computed tomography image of the subject.

In this scenario, there is one first CT image acquired with a single CT scan available, on which an artificial transformations is performed that deforms the CT image, thus providing a second CT image. A random artificial transformation can be used to deform the CT scan before CBCT simulation. Depending on the application, different transformation models can be selected to generate the random transformation. For a simple coarse alignment of CT and CBCT scan, affine transformations can be selected. In this case, the trained network would predict parameters defining the transformation, e.g., rotation angles, translation vector, etc. If more complex deformations between the images are to be expected, dense transformation fields can be generated using, for example, radial basis functions or biophysical models, for example, to learn the registration of inhale and exhale scans. In a specific embodiment, the transformation T could be chosen not randomly but stem from a former registration with any other (intra- or inter-patient) dataset. In this way, the domain of T would consist of realistic transformations, but requirements on the available data would be higher. The generation of a simulated CBCT image can be performed with either of the CT images. It is easy to collect training data in this scenario, because only single scans are required. However, the applicability depends on the transformation model. In addition, only spatial deformations between the scans may be present in the training data, without any longitudinal changes. The artificial transformation T can be applied to transform the CT image I before the generation of the simulated CBCT image, thereby deriving image J: Image J = I_{T}^{CBCT} := (I∘T) ^{CBCT}. An AI-based algorithm can be trained to estimate T' based on I, J, and T.

In an embodiment of the invention, the step of generating data representing the transformation comprises receiving data representing the artificial transformation. Thus, as the data representing the artificial transformation are known per se, there is no separate determination of the transformation necessary.

According to another aspect of the invention, there is provided a computer-implemented method for registering a computed tomography image to a cone-beam computed tomography image. The method comprises the steps of receiving data representing a computed tomography image of a subject, receiving data representing a cone-beam computed tomography image of the subject, and determining a transformation necessary for registering the computed tomography image to the cone-beam computed tomography image using an artificial intelligence module, wherein the artificial intelligence module is trained with training data generated with the method according to any of the preceding embodiments. The method comprises further the steps of registering the computed tomography image to the cone-beam computed tomography image according to the determined transformation, and providing the computed tomography image registered to the cone-beam computed tomography.

This method can be applied in all applications that include CT-to-CBCT registration, e.g., for image-guided lung, liver, or kidney interventions, and offers a very fast and reliable approach for registering the images close to real time. In a supervised registration approach, the artificial intelligence module can be trained to predict a transformation T':=y(I,J) given the two images I, J and a ground truth transformation T as set of training data by minimizing a loss function L(T,T'). At least one of the images I and J is a simulated CBCT image generated by the simulation method as described above.

According to another aspect of the invention, there is provided a computer-implemented method for segmenting a cone-beam computed tomography image. The method comprises the steps of receiving data representing a cone-beam computed tomography image of a subject acquired by a cone-beam computed tomography scanner,
segmenting the cone-beam computed tomography image using an artificial intelligence module, wherein the artificial intelligence module is trained with training data comprising a plurality of simulated cone-beam computed tomography images generated with the method according to any of the preceding embodiments, and providing the segmented cone-beam computed tomography image.

Thus, an AI-based segmentation can be trained to segment anatomical structures in CBCT images using simulated CBCT data generated with the simulation method as described above.

In an embodiment of the invention, the training data comprises a plurality of computed tomography images acquired with a computed tomography scanner and/or a plurality of cone-beam computed tomography images acquired with a cone-beam computed tomography scanner.

The final training dataset for a preferably supervised training can have different compositions. In a first composition, only simulated CBCT data are used. In this most basic embodiment, a set of CT images is collected and one or multiple CBCT scans are simulated for each CT scan using different parameter settings, like scanner positioning, noise level, etc. In this way, a model specific to (simulated) CBCT data is trained. In a second composition of the training data set, CT images and simulated CBCT images are used. In this embodiment, original CT scans can also be used during training. In this way, a rather generic CT-CBCT model capable of segmenting both CT and (simulated) CBCT data is trained. In a third composition of the training data set, CT images, simulated CBCT images and real CBCT data are used. Additionally, real CBCT data can be used to incorporate properties of the data that cannot be covered by the simulation, e.g., specific types of image artifacts, devices, or surgical scenarios.

In addition or alternatively, simulated CBCT data can be used to pre-train a model for a specific task, which is then refined by training the model a few further epochs using clinical CBCT data for domain adaptation. Compared to a CT-only pre-trained model, this model must adapt to only specific image properties of the CBCT data, e.g., the characteristic signal-to-noise ratio, while others, e.g., the limited field of view, have already been accounted for during pre-training. Experiments show that in this way, fewer clinical images are needed to achieve appropriate segmentation quality.

This method can be applied in all applications that include CBCT segmentation, e.g., for image-guided lung, liver, or kidney interventions.

In an embodiment of the invention, the artificial intelligence module is trained with the training data using a supervised or a semi-supervised training algorithm. The two main approaches for training an AI-based registration or segmentation algorithm, i.e., supervised or semi-supervised, can be followed depending on the target application and data availability.

According to another aspect of the invention, there is provided a data processing apparatus comprising a processor configured to perform the steps of the method according to any of the preceding embodiments.

According to another aspect of the invention, there is provided a computer program comprising instructions which, when the program is executed by a computer, cause the computer to carry out the steps of the method according to any of the preceding embodiments. The computer program element can be performed on one or more processing units, which are instructed to perform the method according to any of the preceding embodiments.

According to another aspect of the invention, there is provided a computer-readable storage medium comprising instructions which, when executed by a computer, cause the computer to carry out the steps of the method according to any of the preceding embodiments.
Thus, the benefits provided by any of the above aspects equally apply to all of the other aspects and vice versa.

In summary, the invention relates to a computer-implemented method for generating a simulated cone-beam computed tomography image based on a computed tomography image. In some embodiments, a computed tomography image is converted into attenuation coefficients of the represented tissue, and the computed tomography image is forward-projected to a projection image based on predetermined scanner parameters of a simulated cone-beam computed tomography scanner. After the addition of artificial noise to the projection image representing noise detected by the simulated cone-beam computed tomography scanner, the projection image is back-projected with a predetermined reconstruction algorithm for the generation of a simulated cone-beam computed tomography image of the subject. The present invention relates further to a method for generating training data for training an artificial intelligence module based on the simulated images, and to methods for registering a computed tomography image to a cone-beam computed tomography image and for segmenting a cone-beam computed tomography image with an artificial intelligence module trained with training data comprising the simulated cone-beam computed tomography images.

One of the advantages of the present application is that the algorithm of the present invention can directly simulate CBCT images from CT images.

Another advantage is that it is possible to omit simulating the General Adversarial Network (GAN) simulation, which allows to speed up the process of simulation with improved quality of simulations.

Another advantage may be that it would be possible to simulate the CBCT images near real-time omitting the lag in simulation.

These advantages are non-limiting and other advantages may be envisioned within the context of the present application.

The above aspects and embodiments will become apparent from and be elucidated with reference to the exemplary embodiments described hereinafter. Exemplary embodiments of the invention will be described in the following with reference to the following drawings:

### BRIEF DESCRIPTION OF THE DRAWINGS

Fig. 1 shows a block diagram of a computer-implemented method for generating a simulated cone-beam computed tomography image based on a computed tomography image according to an embodiment of the invention.
Fig. 2 shows exemplary images of generated simulated CBCT scans based on a CT scan using different parameter settings.
Fig. 3 shows a block diagram of a computer-implemented method for generating training data for training of an artificial intelligence module to register a cone-beam computed tomography image to a computed tomography image according to an embodiment of the invention.
Figs. 4a and 4b show block diagram of the two strategies for generating training data sets and for training an AI-based CT-to-CBCT registration algorithm.
Fig. 5 shows a block diagram of a computer-implemented method for registering a computed tomography image to a cone-beam computed tomography image according to an embodiment of the invention.
Fig. 6 shows a block diagram of a computer-implemented method for segmenting a cone-beam computed tomography image according to an embodiment of the invention.
Fig. 7 shows an automatic kidney segmentation of a clinical CBCT scan.

### DETAILED DESCRIPTION OF EMBODIMENTS

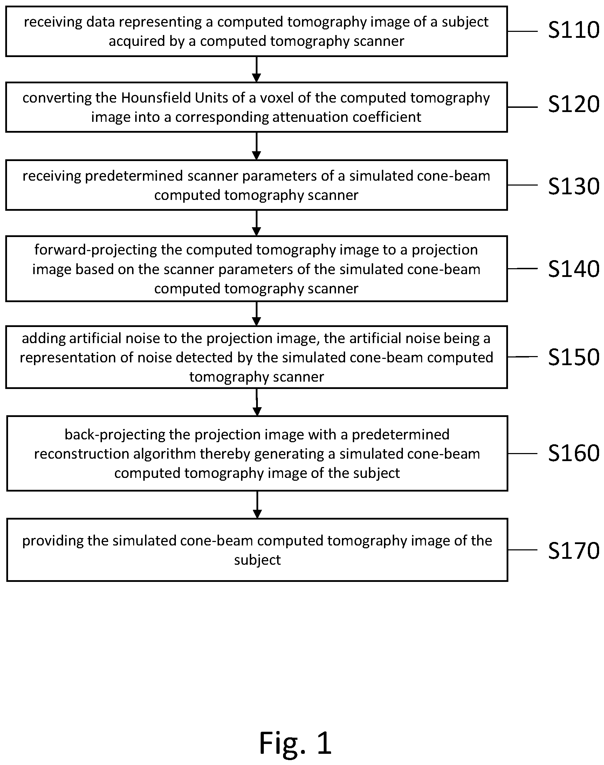

Fig. 1 shows a block diagram of a computer-implemented method for generating a simulated cone-beam computed tomography image based on a computed tomography image according to an embodiment of the invention. The method comprises the steps S 110 of receiving data representing a computed tomography image of a subject acquired by a computed tomography scanner, the computed tomography image comprising a volume of the subject being divided into a plurality of voxels, each voxel comprising a representation of a tissue property of a tissue of the subject in Hounsfield Units, and the step S120 of converting the Hounsfield Units of a voxel of the computed tomography image into a corresponding attenuation coefficient. The method comprises further the step S130 of receiving predetermined scanner parameters of a simulated cone-beam computed tomography scanner, the step S140 of forward-projecting the computed tomography image to a projection image based on the scanner parameters of the simulated cone-beam computed tomography scanner, and the step S150 of adding artificial noise to the projection image, the artificial noise being a representation of noise detected by the simulated cone-beam computed tomography scanner. The method comprises further the step S160 of back-projecting the projection image with a predetermined reconstruction algorithm thereby generating a simulated cone-beam computed tomography image of the subject, and the step S170 of providing the simulated cone-beam computed tomography image of the subject.

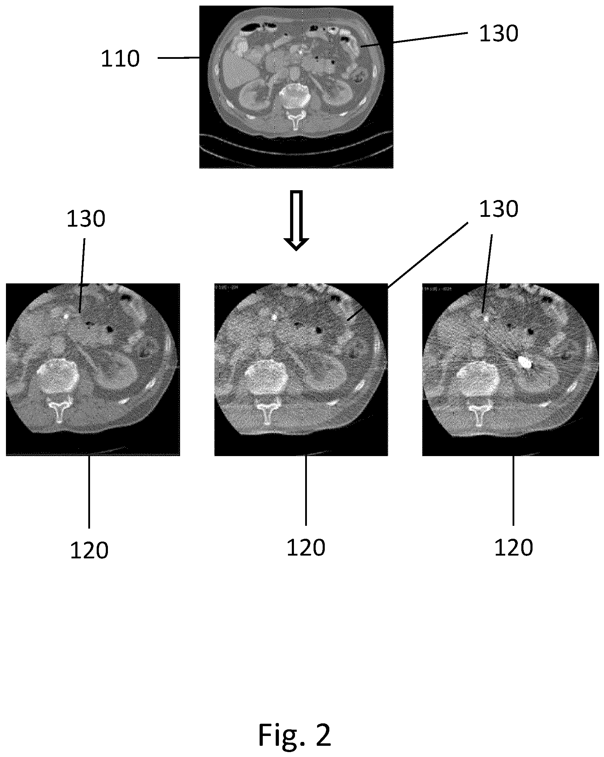

Fig. 2 shows exemplary images of generated simulated CBCT scans 120 of a subject 130 based on a CT scan 110 using different parameter settings. The upper image is a CT image acquired with a computed tomography scanner. The three images in the lower row show simulated CBCT images 120 based on the CT image 110, which are generated with the method according to the invention. The image on the left is a generated simulated CBCT image with a field-of-view constraint, whereas the image in the middle comprise additional limited angle artefacts. The image on the right shows additional iodine beam hardening artefacts due to the urinary outflow tract being filled with a contrast agent.

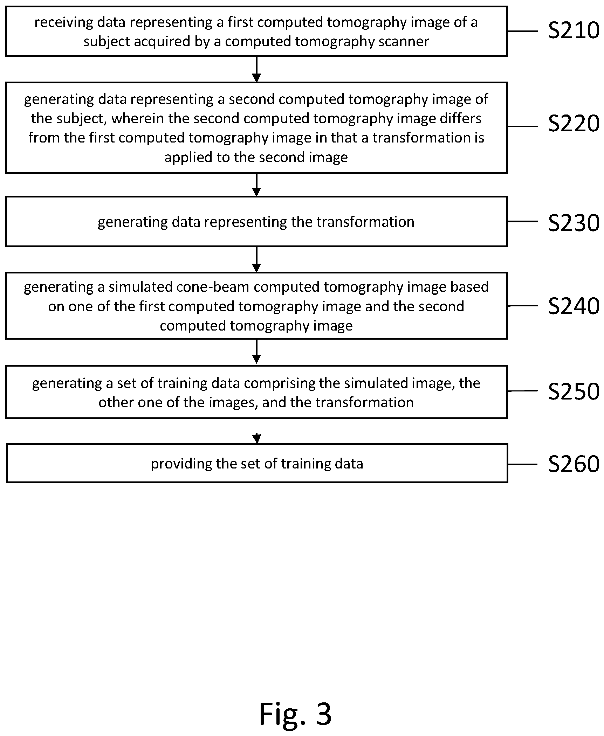

Fig. 3 shows a block diagram of a computer-implemented method for generating training data for training of an artificial intelligence module to register a cone-beam computed tomography image to a computed tomography image according to an embodiment of the invention. The method comprises the step S210 of receiving data representing a first computed tomography image of a subject acquired by a computed tomography scanner, and the step S220 of generating data representing a second computed tomography image of the subject, wherein the second computed tomography image differs from the first computed tomography image in that a transformation is applied to the second image, the transformation comprising a deformation, distortion, rotation, and/or translation of the subject, and/or a cropped field of view, and the step S230 of generating data representing the transformation. The method comprises further the step S240 of generating a simulated cone-beam computed tomography image based on one of the first computed tomography image and the second computed tomography image according to the method of any of the preceding embodiments, and the step S50 of generating a set of training data, the set of training data comprising the simulated cone-beam computed tomography image based on one of the first computed tomography image and the second computed tomography image, the other one of the first computed tomography image and the second computed tomography image, and data representing the transformation. Further, the set of training data is provided in step S260.

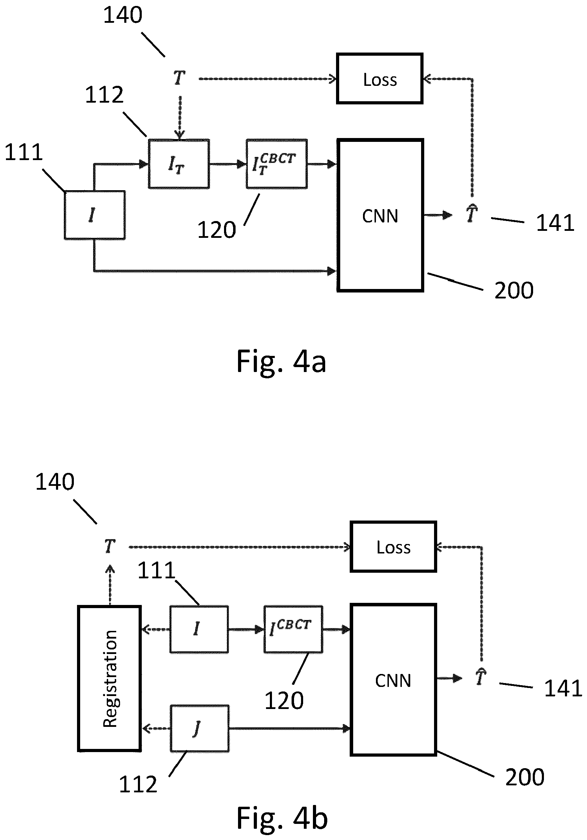

Figs. 4a and 4b show block diagrams of the two strategies for generating training data sets and for training an AI-based CT-to-CBCT registration algorithm. In Fig. 4a, an artificial transformation T is applied to transform the image Ito I_{T} before the simulation I_{T}^{CBCT}:=(I∘T)^{CBCT} is performed to generate a simulated CBCT image. Both images, I and I_{T}^{CBCT} are feed to the convolutional neural network CNN as algorithm to be trained to estimate T' based on I and I_{T}^{CBCT}. A loss function is determined based on T and T' for a supervised learning.

In Fig. 4b, two images I and J are provided, and a real transformation T is determined. In this example, the image I is used to generate the simulated CBCT image I^{CBCT}. Both images, I^{CBCT} and J are feed to the convolutional neural network CNN as algorithm to be trained to estimate T' based on J and I^{CBCT}. A loss function is determined based on T and T' for a supervised learning.

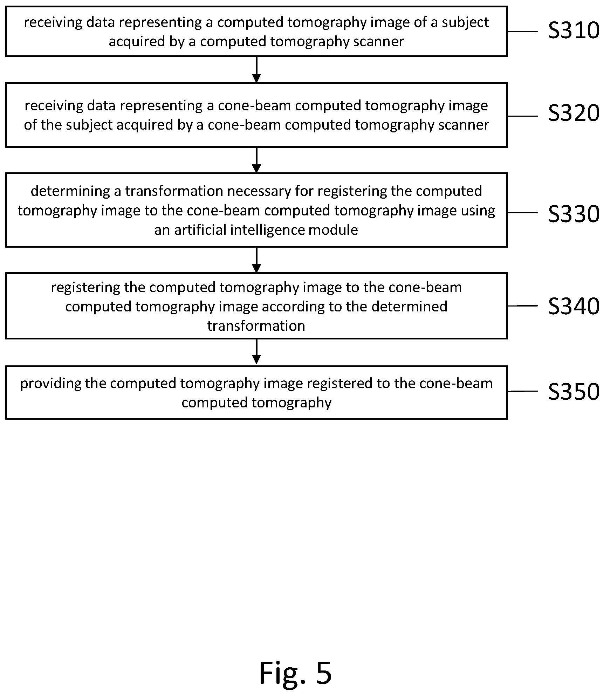

Fig. 5 shows a block diagram of a computer-implemented method for registering a computed tomography image to a cone-beam computed tomography image according to an embodiment of the invention. The method comprises the step S310 of receiving data representing a computed tomography image of a subject acquired by a computed tomography scanner, the step S320 of receiving data representing a cone-beam computed tomography image of the subject acquired by a cone-beam computed tomography scanner, and the step S330 of determining a transformation necessary for registering the computed tomography image to the cone-beam computed tomography image using an artificial intelligence module, wherein the artificial intelligence module is trained with training data generated with the method according to any of the preceding embodiments. The method comprises further the step S340 of registering the computed tomography image to the cone-beam computed tomography image according to the determined transformation, and the step S350 of providing the computed tomography image registered to the cone-beam computed tomography.

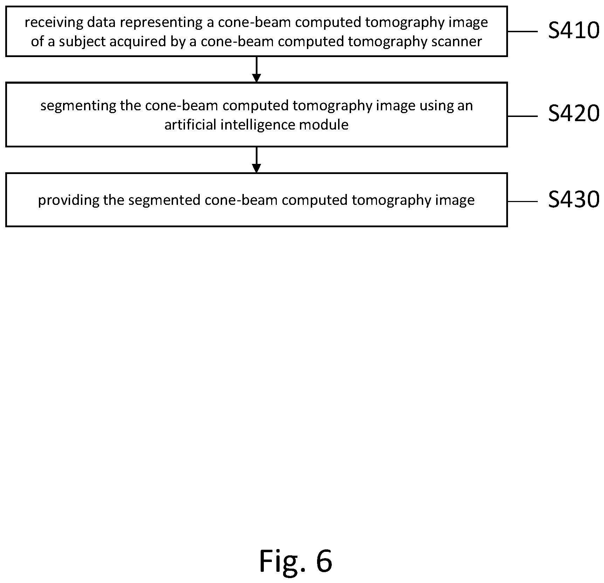

Fig. 6 shows a block diagram of a computer-implemented method for segmenting a cone-beam computed tomography image according to an embodiment of the invention. The method comprises the step S410 of receiving data representing a cone-beam computed tomography image of a subject acquired by a cone-beam computed tomography scanner, the step S420 of segmenting the cone-beam computed tomography image using an artificial intelligence module, wherein the artificial intelligence module is trained with training data comprising a plurality of simulated cone-beam computed tomography images generated with the method according to any of the preceding embodiments, and the step S430 of providing the segmented cone-beam computed tomography image.

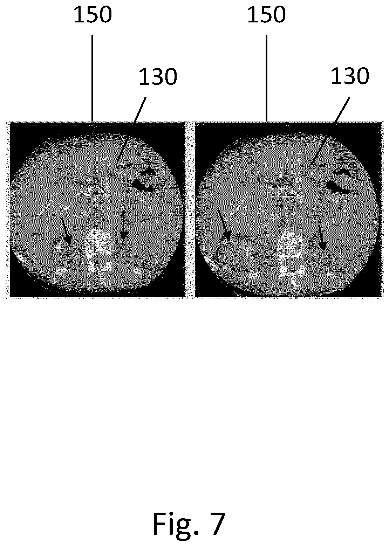

Fig. 7 shows an automatic kidney segmentation of a clinical CBCT scan. The left image 150 shows a segmentation result of an algorithm trained on CT data only that fails to segment the kidney of the subject 130 in the CBCT image correctly, as can be seen in the dark edging in the lower part of the image. The black arrows indicate the dark edging that is used to visualize the segmentation result of the kidneys of the subject 130. The right image 150 shows a segmentation result of an algorithm that was trained on CT and simulated CBCT data that therefore performs significantly better, even though no clinical CBCT data was used during this training procedure. In this image, the dark edging covers the whole area of the kidneys. In our experiments, the CT-only model achieved a Dice of 0.49 when applied to a set of 45 CBCT images, whereas the CT/simulated CBCT model achieved a Dice of 0.65.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. The mere fact that certain measures are re-cited in mutually different dependent claims does not indicate that a combination of these measures cannot be used to advantage. Any reference signs in the claims should not be construed as limiting the scope.

### LIST OF REFERENCE SIGNS:

- 110: computed tomography image
- 111: first computed tomography image
- 112: second computed tomography image
- 120: simulated cone-beam computed tomography image
- 130: subject
- 140: transformation
- 141: determined transformation
- 150: segmented cone-beam computed tomography image
- 200: artificial intelligence module

## Claims

1. A computer-implemented method for generating a simulated cone-beam computed tomography image (120) based on a computed tomography image (110); the method comprising the steps of:
receiving data representing a computed tomography image (110) of a subject (130), the computed tomography image comprising a volume of the subject (130) being divided into a plurality of voxels, wherein the voxels are comprising a representation of a tissue property of a tissue of the subject in Hounsfield Units;
converting the Hounsfield Units of a voxel of the computed tomography image (110) into attenuation coefficients;
receiving predetermined scanner parameters of a simulated cone-beam computed tomography scanner,
forward-projecting the computed tomography image (110) to a projection image based on the scanner parameters of the simulated cone-beam computed tomography scanner;
adding artificial noise to the projection image, the artificial noise being a representation of noise detected by the simulated cone-beam computed tomography scanner;
back-projecting the projection image with a predetermined reconstruction algorithm, thereby generating a simulated cone-beam computed tomography image (120) of the subject; and
providing the simulated cone-beam computed tomography image (120) of the subject.

2. The method according to claim 1, wherein the method further comprises the step of modifying the tissue property of the tissue of the subject (130).

3. The method according to any of claims 1 or 2, wherein the scanner parameters comprise at least two tube peak voltages of the simulated cone-beam computed tomography scanner.

4. The method according to any of claims 1 to 3, wherein the computed tomography image (110) is a fan-beam computed tomography image or a cone-beam computed tomography image.

5. A computer-implemented method for generating training data for training of an artificial intelligence module (200) to register a cone-beam computed tomography image to a computed tomography image, the method comprising the steps of:
receiving data representing a first computed tomography image (111) of a subject (130);
generating data representing a second computed tomography image (112) of the subject (130), wherein the second computed tomography image (112) differs from the first computed tomography image (111) in that a transformation (140) is applied to the second computed tomography image (112), the transformation (140) comprising a deformation, and/or distortion, and/or rotation, and/or translation of the subject (130), and/or a cropped field of view;
generating data representing the transformation (140);
generating a simulated cone-beam computed tomography image (120) based on one of the first computed tomography image (111) and the second computed tomography image (112) according to the method of any of claims 1 to 4, wherein the data representing the computed tomography image (110) comprises the first (111) and/or the second (112) computed tomography image;
generating a set of training data, the set of training data comprising the simulated cone-beam computed tomography image (120) based on one of the first computed tomography image (111) and the second computed tomography image (112), the other one of the first computed tomography image (111) and the second computed tomography image (112), and data representing the transformation (140); and
providing the set of training data.

6. The method according to claim 5, wherein the step of generating data representing a second computed tomography image (112) of the subject (130) comprises receiving data representing the second computed tomography image (112) of the subject (130) acquired by a computed tomography scanner.

7. The method according to claim 6, wherein the step of generating data representing the transformation (140) comprises registering the first computed tomography image (111) to the second computed tomography image (112).

8. The method according to claim 7, wherein the registering of the first computed tomography image (111) to the second computed tomography image (112) is performed with a conventional or an AI-based registering algorithm.

9. The method according to claim 5, wherein the step of generating data representing a second computed tomography image (112) of the subject (130) comprises applying an artificial transformation (140) to the data representing the first computed tomography image (111) of the subject (130) thereby generating data representing the second computed tomography image (112) of the subject (130).

10. The method according to claim 9, wherein the step of generating data representing the transformation (140) comprises receiving data representing the artificial transformation (140).

11. A computer-implemented method for registering a computed tomography image to a cone-beam computed tomography image, the method comprising the steps of:
receiving data representing a computed tomography image (110) of a subject;
receiving data representing a cone-beam computed tomography image of the subject;
determining a transformation (141) necessary for registering the computed tomography image to the cone-beam computed tomography image using an artificial intelligence module (200),
wherein the artificial intelligence module (200) is trained with training data generated with the method according to any of claims 5 to 10;
registering the computed tomography image to the cone-beam computed tomography image according to the determined transformation (141); and
providing the computed tomography image registered to the cone-beam computed tomography.

12. A computer-implemented method for segmenting a cone-beam computed tomography image, the method comprising the steps of:
receiving data representing a cone-beam computed tomography image of a subject acquired by a cone-beam computed tomography scanner;
segmenting the cone-beam computed tomography image using an artificial intelligence module (200),
wherein the artificial intelligence module (200) is trained with training data comprising a plurality of simulated cone-beam computed tomography images generated with the method according to any of claims 1 to 4; and
providing the segmented cone-beam computed tomography image (150).

13. The method according to claim 12, wherein the training data comprises a plurality of computed tomography images acquired with a computed tomography scanner and/or a plurality of cone-beam computed tomography images acquired with a cone-beam computed tomography scanner.

14. The method according to any of claims 11 to 13, wherein the artificial intelligence module (200) is trained with the training data using a supervised or a semi-supervised training algorithm.

15. A computer program comprising instructions which, when the program is executed by a computer, cause the computer to carry out the steps of the method according to any of claims 1 to 14.
